# EUROPEAN PATENT APPLICATION

(11) **EP 3 798 594 A1**
(43) Date of publication of application: **31.03.2021**
(21) Application number: 19199827.7
(22) Date of filing: 26.09.2019
(51) Int. Cl.: G01K 1/02, G01K 7/34

(54) **APPARATUS FOR SENSING THE TEMPERATURE OF AN OBJECT**

(71) Applicant: Koninklijke Philips N.V., 5656 AG Eindhoven (NL)
(72) Inventor: Mueller, Hannes, 5656 AE Eindhoven (NL)
(74) Representative: de Haan, Poul Erik

(57) **Abstract**

There is provided an apparatus (100) for sensing the temperature of an object. The apparatus comprises a sensing element (110) to be inserted into or placed adjacent to the object, the sensing element comprising a resonant circuit (112), and the resonant circuit having a temperature-dependent resonant frequency and comprising a capacitor (114). The apparatus further comprises a detection unit (120) configured to interface with the resonant circuit to receive a response associated with a current resonant frequency of the resonant circuit, and a control unit (130) configured to determine the current resonant frequency of the resonant circuit based on the received response, and to determine the temperature of the object based on the determined current resonant frequency of the resonant circuit. The sensing element and the detection unit are physically unconnected.

## Description

### FIELD OF THE INVENTION

The present disclosure relates to an apparatus for sensing the temperature of an object and a method of operating thereof.

### BACKGROUND OF THE INVENTION

Many cooking and baking devices make use of interactive recipes in order to ensure optimized taste and healthiness of the cooked meals. For these devices it is usually important to measure the core temperature of the food item. As an example, it is crucial to monitor the temperature of a beef steak during cooking in order to achieve a desired doneness, such as medium, medium-rare, etc. Similarly, it is also helpful to measure accurately the doneness of other types of food items, e.g. vegetables.

### SUMMARY OF THE INVENTION

There are a number of drawbacks associated with the currently available temperature sensing techniques. For example, some temperature sensors require the use of intrusive cabling which is unhandy to use and may make it difficult for a user to operate the temperature sensor in a user-friendly and correct manner. As another example, some temperature sensors require the use of batteries which may be troublesome in terms of installation and replacement.

Consumer feedback with respect to wired temperature sensors is mostly negative, and accordingly there is a demand for practical wireless temperature sensing solutions. However, currently available wireless temperature sensing solutions typically involve wireless communication technologies such as Wi-Fi and Bluetooth, and they are usually limited to a small operating temperature range that may be inappropriate or insufficient for cooking applications (e.g. frying, baking, etc.). Other types of currently available wireless temperature sensors involve techniques based on the use of quartz crystals and/or surface acoustic waves, which significantly increases the costs relating to manufacture and maintenance. A cost-effective wireless temperature sensor would be greatly preferred by consumers from the point of view of usability, as well as achieving a desired level of taste and healthiness of the resulting cooked food items. It would therefore be advantageous to provide an improved apparatus for sensing the temperature of an object, and a method of operating thereof.

To better address one or more of the concerns mentioned earlier, in a first aspect, an apparatus for sensing the temperature of an object is provided. The apparatus comprises: a sensing element configured to be inserted into or placed adjacent to the object, wherein the sensing element comprises a resonant circuit, the resonant circuit having a temperature-dependent resonant frequency and comprising a capacitor, and wherein the capacitor has a temperature coefficient in a predetermined range, a detection unit configured to interface with the resonant circuit to receive a response associated with a current resonant frequency of the resonant circuit, wherein the sensing element and the detection unit are physically unconnected, and a control unit configured to determine the current resonant frequency of the resonant circuit based on the received response, and to determine the temperature of the object based on the determined current resonant frequency of the resonant circuit.

In some embodiments, the detection unit may comprise a transmitter-receiver coil, and may be configured to interface with the resonant circuit by controlling the transmitter-receiver coil to perform a frequency sweep to excite the resonant circuit in the sensing element. The frequency sweep may be a stepped sweep including a plurality of discrete steps each associated with a different frequency band, and the resonant circuit may be configured to transmit a response signal for each step in the sweep. Also, the control unit may be configured to determine the current resonant frequency of the resonant circuit by processing the response signals. In these embodiments, the detection unit may be configured to perform each step in the frequency sweep by transmitting a corresponding radio-frequency stimulating signal to the resonant circuit of the sensing element.

In some embodiments, the temperature coefficient of the capacitor may be predetermined based on an estimated temperature range of the object. The capacitor may be a ceramic capacitor. Furthermore, the ceramic capacitor may comprise Y5V material.

In some embodiments, the sensing element may be a first sensing element, and the apparatus may further comprise one or more additional sensing elements each comprising a respective resonant circuit and each configured to be inserted into or placed adjacent to the object, and each of the respective resonant circuits of the one or more additional sensing elements having a different temperature-dependent resonant frequency. In these embodiments, temperature-dependent resonant frequency of each of the resonant circuits may be different from the temperature-dependent resonant frequency of the resonant circuit of the first sensing element. The detection unit may be configured to interface with each of the resonant circuits to receive a response associated with a current resonant frequency of the respective resonant circuit. In these embodiments, the control unit may be configured to: determine the current resonant frequency of a resonant circuit of a respective additional sensing element based on the received response; and determine the temperature of the object or a part of the object corresponding to the respective additional sensing element, based on the determined current resonant frequency of the resonant circuit of the respective additional sensing element.

In some embodiments, the apparatus may further comprise a display unit configured to display the determined temperature of the object.

In some embodiments, there is provided a cooking device comprising the apparatus as described herein. In these embodiments, the sensing element of the apparatus may be configured to be inserted into or placed adjacent to a food item in the cooking device, and the control unit may be configured to determine the temperature of the food item.

In a second aspect, there is provided a method of operating an apparatus for sensing the temperature of an object. The apparatus comprises a sensing element having a resonant circuit, a detection unit physically unconnected with the sensing element, and a control unit, wherein the sensing element is configured to be inserted into or placed adjacent to the object, and the resonant circuit has a temperature-dependent resonant frequency and comprises a capacitor which has a temperature coefficient in a predetermined range. The method comprises: interfacing the detection unit with the resonant circuit to receive a response associated with a current resonant frequency of the resonant circuit; determining, by the control unit, the current resonant frequency of the resonant circuit based on the received response; and determining, by the control unit, the temperature of the object based on the determined current resonant frequency of the resonant circuit.

In some embodiments, the detection unit may comprise a transmitter-receiver coil, and in these embodiments interfacing the detection unit with the resonant circuit may comprise controlling the transmitter-receiver coil to perform a frequency sweep to excite the resonant circuit in the sensing element.

In some embodiments, performing the frequency sweep may comprise performing a stepped sweep which includes a plurality of discrete steps each associated with a different frequency band, and the method may further comprise transmitting, by the resonant circuit, a response signal for each step in the sweep. Furthermore, in these embodiments, determining the current resonant frequency of the resonant circuit may comprise processing the response signals to determine the current resonant frequency.

In some embodiments, performing the stepped sweep may comprise perform each step in the frequency sweep by transmitting a corresponding radio-frequency stimulating signal to the resonant circuit of the sensing element.

In some embodiments, the method may further comprise controlling a display unit to display the determined temperature of the object.

According to the aspects and embodiments described above, the limitations of existing techniques are addressed. In particular, the above-described aspects and embodiments enable passive temperature sensing to be performed in a wireless manner based on the use of relatively inexpensive electronic components, without the need for separate digital communication. The embodiments described above offer temperature sensing solutions that can be easily integrated into cooking devices. In this way, the embodiments as described in the present disclosure allow mass production of practical wireless temperature sensing solutions while keeping manufacturing and maintenance costs low.

There is thus provided an improved apparatus for sensing the temperature of an object, and a method of operating thereof. These and other aspects of the disclosure will be apparent from and elucidated with reference to the embodiment(s) described hereinafter.

### BRIEF DESCRIPTION OF THE DRAWINGS

For a better understanding of the embodiments, and to show more clearly how they may be carried into effect, reference will now be made, by way of example only, to the accompanying drawings, in which:
Fig. 1 is a block diagram of an apparatus for sensing the temperature of an object according to an embodiment;
Fig. 2 is a schematic diagram of an apparatus for sensing the temperature of an object according to another embodiment; and
Fig. 3 is a flowchart illustrating a method of operating an apparatus for sensing the temperature of an object according to an embodiment.

### DETAILED DESCRIPTION OF EMBODIMENTS

As noted above, there is provided an improved apparatus and a method of operating the same which addresses the existing problems.

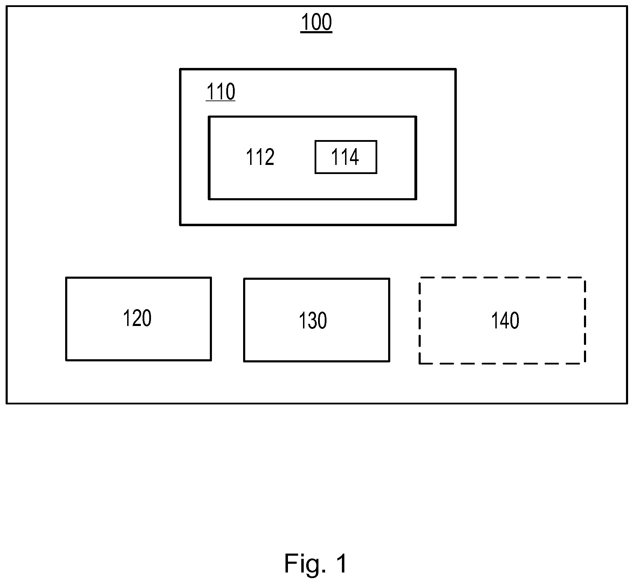

Fig. 1 shows a block diagram of an apparatus 100 according to an embodiment, which can be used for sensing the temperature of an object. As illustrated in Fig. 1, the apparatus 100 comprises a sensing element 110 configured to be inserted into or placed adjacent the object. For example, the sensing element 110 may be inserted into a solid food item (e.g. a potato) or a liquid food item (e.g. soup). The sensing element 110 comprises a resonant circuit 112 (e.g. a LC circuit), which has a temperature-dependent resonant frequency. The resonant circuit 112 comprises a capacitor 114 which has a temperature coefficient in a predetermined range. In some embodiments, the temperature coefficient of the capacitor 114 may be predetermined based on an estimated temperature range of the object.

The capacitor 114 may be a ceramic capacitor, and the ceramic capacitor may comprise Y5V (dielectric) material. It may be advantageous to use ceramic capacitors comprising Y5V material in the apparatus 100 described herein, as these types of capacitors typically possess the beneficial property that enables the resonant circuit 112 to alter in its properties depending on the surrounding temperature, and therefore such alteration in properties allow the temperature of the object to be determined. In more detail, in multi-layer ceramic capacitors (MLCC) the insulating material between the electrodes (also known as dielectric material) has a high impact on the resulting capacity of the capacitor, the properties of the dielectric material vary against its temperature - although this is typically an unwanted parasitic effect in an electronic circuit, in this case this particular effect allows the temperature of the capacitor to be estimated or determined.

Furthermore, in some embodiments where the sensing element 110 is inserted into an object, the capacitor 114 may be protected from overheating by the object. For example, the capacitor 114 may be protected from overheating once the sensing element 110 is inserted into a food item that is placed inside a baking oven.

Although not shown in Fig. 1, in some embodiments the apparatus 100 may comprise one or more additional sensing elements. In these embodiments the sensing element 110 may be referred to as the "first sensing element", and the one or more additional sensing elements may be referred to, collectively, as "additional sensing element(s)". In these embodiments, each of the one or more additional sensing elements may comprise a respective resonant circuit, and each of the one or more additional sensing elements may be inserted into or placed adjacent to the object. Each of the respective resonant circuits of the one or more additional sensing elements in these embodiments may have a different temperature-dependent resonant frequency from each other. In addition, the temperature-dependent resonant frequency of each of the resonant circuits may be different from the temperature-dependent resonant frequency of the resonant circuit of the first sensing element 110.

The apparatus 100 further comprises a detection unit 120. The detection unit 120 is configured to interface with the resonant circuit 112 to receive a response associated with a current resonant frequency of the resonant circuit 112.

In some embodiments, the detection unit 120 may comprise a transmitter-receiver coil. In these embodiments, the interfacing operation may comprise inducing a magnetic coupling between the detection unit 120 and the resonant circuit 112. In more detail, a magnetic coupling may be induced between the transmitter-receiver coil of the detection unit 120 and the resonant circuit 112 when the sensing element 110 is placed within the vicinity of the detection unit 120.

Furthermore, in these embodiments wherein the detection unit 120 comprises a transmitter-receiver coil, the detection unit 120 may be configured to interface with the resonant circuit 112 by controlling the transmitter-receiver coil to perform a frequency sweep to excite the resonant circuit 112 in the sensing element 110. The frequency sweep may be a stepped sweep including a plurality of discrete steps each associated with a different frequency band. The detection unit 120 may be configured to perform each step in the frequency sweep by transmitting a corresponding radio-frequency stimulating signal to the resonant circuit 112 of the sensing element 110, and the resonant circuit 112 may be configured to transmit a response signal for each step in the sweep as a result of the excitation. A corresponding radio-frequency stimulating signal may be within the frequency range of 10kHz to 1MHz. Other frequency band ranges and values would be possible depending on the type of circuit used as the resonant circuit 112.

As indicated above, in some embodiments the apparatus 100 may comprise one or more additional sensing elements each comprising a respective resonant circuit. In these embodiments, the detection unit 120 may be configured to interface with each of the resonant circuits of the additional sensing element(s) and of the first sensing element 110, in order to receive a response associated with a current resonant frequency of the respective resonant circuit. Therefore, in these embodiments, for each of the resonant circuits associated with first sensing element and the additional sensing element(s), a respective response may be received.

Although the sensing element 110 and the detection unit 120 are both part of the apparatus 100, the sensing element 110 and the detection unit 120 are physically unconnected. Furthermore, the sensing element 110 and the control unit 130 may also be physically unconnected. Therefore, during an operation of the apparatus 100, the sensing element 110 can be inserted into or placed adjacent to the object in a wireless manner, which in turn improves the usability and flexibility of the apparatus 100 as a whole. In addition, since the sensing element 110 may be physically detached from the rest of the components of the apparatus 100, the sensing element 110 can be maintained, replaced, and cleaned easily.

The apparatus 100 further comprises a control unit 130 configured to determine the current resonant frequency of the resonant circuit 112 based on the received response. The control unit 130 is also configured to determine the temperature of the object based on the determined current resonant frequency of the resonant circuit. Since within an appropriate temperature range there is a strong correlation between temperature and a current resonant frequency of the resonant circuit 112, the determination of the temperature of the object may be based on such correlation. Moreover, since a change in the temperature surrounding the capacitor 114 of the resonant circuit 112 would result in shifting of the resonant frequency of the resonant circuit 112, the shift of resonant frequency would be indicative of a change in the temperature surrounding the capacitor 114.

Based on preliminary test measurements, depending on the material used in the capacitor 114, and/or the type of capacitor 114 used in the resonant circuit 112, in some embodiments the apparatus 100 as described herein may have an operating temperature range from 10°C to 100°C. In some embodiments, the sensing element 110 may be configured such that when the temperature at the capacitor 114 exceeds a predetermined value (e.g. 120°C), a shutoff mechanism is effected so as to prevent damage to the sensing element 110 and/or the rest of the components in the apparatus 100.

As indicated above, in some embodiments the resonant circuit 112 may be configured to transmit a response for each step in a stepped sweep. In these embodiments, the control unit 130 may be configured to determine the current resonant frequency of the resonant circuit 112 by processing the response signals from the resonant circuit 112. Specifically, the control unit 130 may determine the current resonant frequency of the resonant circuit 112 based on the corresponding strengths and/or measured frequency values of the frequency-dependent response signals from the resonant circuit 112.

As indicated above, in some embodiments the apparatus 100 may comprise one or more additional sensing elements each comprising a respective resonant circuit, and in these embodiments the detection unit 120 maybe configured to interface with each of the resonant circuits of the additional sensing element(s) and of the first sensing element 110, in order to receive a response associated with a current resonant frequency of the respective resonant circuit. In these embodiments, the control unit 130 may be further configured to determine the current resonant frequency of a resonant circuit of a respective additional sensing element, based on the respective received response. Subsequently, the control unit 130 may be configured to determine the temperature of the object, or the temperature of a part of the object corresponding to the respective additional sensing element, based on the determined current resonant frequency of the resonant circuit of the respective additional sensing element. The part of the object corresponding to a respective additional sensing element may be a partial volume immediately adjacent to a location at which the respective additional sensing element is placed.

In some embodiments, the control unit 130 may generally control the operation of the apparatus 100. The control unit 130 can comprise one or more processors, processing units, multi-core processor or modules that are configured or programmed to control the apparatus 100 in the manner described herein. In particular implementations, the control unit 130 can comprise a plurality of software and/or hardware modules that are each configured to perform, or are for performing, individual or multiple steps of the method described herein.

In some embodiments, the apparatus 100 may further comprise a display unit 140 configured to display the determined temperature of the object.

Although not illustrated in Fig. 1, in some embodiments the apparatus 100 may further comprise at least one user interface. Alternatively or in addition, at least one user interface may be external to (i.e. separate to or remote from) the apparatus 100. For example, at least one user interface may be part of another apparatus. A user interface may be for use in providing a user of the apparatus 100 with information resulting from the operation described herein. Alternatively or in addition, a user interface may be configured to receive a user input. For example, a user interface may allow a user of the apparatus 100 to manually enter instructions, data, or information. In these embodiments, the control unit 130 maybe configured to acquire the user input from one or more user interfaces.

A user interface may be any user interface that enables the rendering (or output or display) of information to a user of the apparatus 100. Alternatively or in addition, a user interface may be any user interface that enables a user of the apparatus to provide a user input, interact with and/or control the apparatus 100. For example, the user interface may comprise one or more switches, one or more buttons, a keypad, a keyboard, a touch screen or an application (for example, on a tablet or smartphone), a display screen, a graphical user interface (GUI) or other visual rendering component, one or more speakers, one or more microphones or any other audio component, one or more lights, a component for providing tactile feedback (e.g. a vibration function), or any other user interface, or combination of user interfaces. In some embodiments, the display unit 140 may be regarded as part of a user interface of the apparatus 100.

Although not illustrated in Fig. 1, in some embodiments the apparatus 100 may comprise a memory. Alternatively or in addition, one or more memories may be external to (i.e. separate to or remote from) the apparatus 100. For example, one or more memories may be part of another apparatus. A memory can be configured to store program code that can be executed by the control unit 130 to perform the method described herein. A memory can be used to store information, data, signals and measurements acquired or made by the control unit 130 of the apparatus 100. For example, a memory may be used to store (for example, in a local file) the determined temperature of the object. The control unit 130 may be configured to control a memory to store the determined temperature of the object.

Although not illustrated in Fig. 1, in some embodiments the apparatus 100 may comprise a communications interface (or circuitry) for enabling the apparatus 100 to communicate with any interfaces, memories and/or devices that are internal or external to the apparatus 100. The communications interface may communicate with any interfaces, memories and/or devices wirelessly or via a wired connection. For example, the communications interface may communicate with one or more user interfaces wirelessly or via a wired connection. Similarly, the communications interface may communicate with the one or more memories wirelessly or via a wired connection.

It will be appreciated that Fig. 1 only shows the components required to illustrate an aspect of the apparatus 100 and, in a practical implementation, the apparatus 100 may comprise alternative or additional components to those shown.

It will also be appreciated that the apparatus 100 as illustrated in Fig. 1 may be implemented into a cooking device or a general kitchen device for temperature sensing. For example, the apparatus 100 of Fig. 1 maybe implemented in an air fryer, a baking oven, a grill, a stirrer, or a steamer, etc. In some embodiments, there may be provided a cooking device comprising the apparatus 100 as described herein. In these embodiments, the sensing element 110 of the apparatus 100 may be configured to be inserted into or placed adjacent to a food item in the cooking device. Furthermore, the control unit 130 of the apparatus 100 may be configured to determine the temperate of the food item. In further detail, the detection unit 210 maybe located near a cooking chamber of the cooking device, while the sensing element may be inserted into or placed adjacent to the food item inside the cooking chamber. In these embodiments, the object for which the temperature is sensed by the apparatus 100 is the food item contained in the cooking device. The apparatus 100 may also be implemented at any kitchen appliances, in particular where a measurement of the core temperature and/or the surface temperature of food item(s) is advantageous in the operation of such kitchen appliance.

Moreover, it will be appreciated that the apparatus 100 may be implemented in other fields including medical, wellbeing, process monitoring, etc. in which a passive temperature sensing technique may be advantageous.

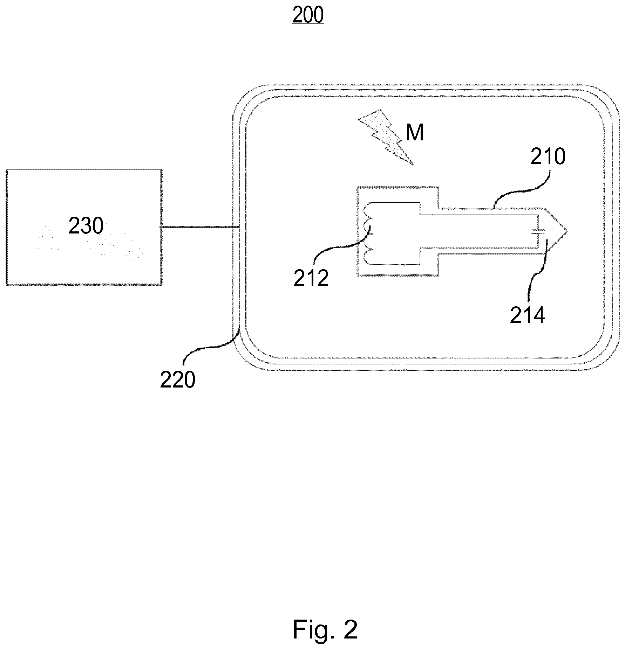

Fig. 2 is a schematic diagram of an apparatus for sensing the temperature of an object according to another embodiment. As illustrated in Fig. 2, the apparatus 200 comprises a sensing element 210, a detection unit 220, and a control unit 230.

The sensing element 210 in the present embodiment is provided in the form of a sensing probe that is physically unconnected with the detection unit 220 and the control unit 230, and the sensing element 210 is configured to be inserted into or placed adjacent the object. The spiked-shape at one end of the sensing element 210 in the present embodiment, as illustrated in Fig. 2, allows the sensing element 210 to be more easily inserted into an object, e.g. a food item such as a piece of meat or a potato. The sensing element 210 comprises a resonant circuit 212, which has a temperature-dependent resonant frequency. In the present embodiment, the resonant circuit 212 is encapsulated inside the sensing probe and comprises a capacitor 214 which has a temperature coefficient in a predetermined range. In some embodiments, the temperature coefficient of the capacitor 214 may be predetermined based on an estimated temperature range of the object. The capacitor 214 maybe a ceramic capacitor, and the ceramic capacitor may comprise Y5V material.

The detection unit 220 is configured to interface with the resonant circuit 212 to receive a response associated with a current resonant frequency of the resonant circuit 212. The magnetic coupling M between the detection unit 220 and the resonant circuit 212 resulting from the interface operation between these two components is represented by a lightning icon in Fig. 2. In more detail, in the present embodiment the resonant circuit 212 of the sensing element 210 is placed inside the magnetic field generated by the transmitter-receiver coil of the detection unit 220, therefore resulting in the magnetic coupling M between these components.

Although Fig. 2 only illustrates the transmitter-receiver coil of the detection unit 220, it will be appreciated that the detection unit 220 comprises additional component(s) which allow the transmitter-receive coil to be controlled to perform the functions as described herein. In more detail, these component(s) of the detection unit 220 enable the detection unit 220 to interface with the resonant circuit 212 by controlling the transmitter-receiver coil to perform a frequency sweep to excite the resonant circuit 212 in the sensing element 210. The frequency sweep may be a stepped sweep including a plurality of discrete steps each associated with a different frequency band. In the present embodiment, the detection unit 120 may be configured to perform each step in the frequency sweep by transmitting a corresponding radio-frequency stimulating signal to the resonant circuit 212 of the sensing element 210, and the resonant circuit 212 may be configured to transmit a response signal for each step in the sweep as a result of the excitation. A corresponding radio-frequency stimulating signal may be within the frequency range of 10kHz to 1MHz.

The control unit 230 configured to determine the current resonant frequency of the resonant circuit 112 based on the response associated with a current resonant frequency of the resonant circuit 212, and to determine the temperature of the object based on the determined current resonant frequency of the resonant circuit 212. Since within an appropriate temperature range there is a strong correlation between temperature and a current resonant frequency of the resonant circuit 212, the determination of the temperature of the object may be based on such correlation. Moreover, since a change in the temperature surrounding the capacitor 214 of the resonant circuit 212 would result in shifting of the resonant frequency of the resonant circuit 212, the shift of resonant frequency would be indicative of a change in the temperature surrounding the capacitor 214. Depending on the material used in the capacitor 214 and/or the type of capacitor 214, in some embodiments the apparatus 200 as described herein may have a operating temperature range from 10°C to 100°C.

In some embodiments, the control unit 230 may generally control the operation of the apparatus 200. The control unit 230 can comprise one or more processors, processing units, multi-core processor or modules that are configured or programmed to control the apparatus 200 in the manner described herein. In particular implementations, the control unit 230 can comprise a plurality of software and/or hardware modules that are each configured to perform, or are for performing, individual or multiple steps of the method described herein.

As indicated above, in some embodiments the resonant circuit 212 may be configured to transmit a response for each step in a stepped sweep. In these embodiments, the control unit 230 may be configured to determine the current resonant frequency of the resonant circuit 212 by processing the response signals from the resonant circuit 212. Specifically, the control unit 230 may determine the current resonant frequency of the resonant circuit 212 based on the corresponding strengths and/or measured frequency values of the frequency-dependent response signals from the resonant circuit 212.

It will be appreciated that Fig. 2 only shows the components required to illustrate an aspect of the apparatus 200 and, in a practical implementation, the apparatus 200 may comprise alternative or additional components to those shown.

It will also be appreciated that the apparatus 200 as illustrated in Fig. 2 may be implemented into a cooking device or a general kitchen device for temperature sensing. For example, the apparatus 200 of Fig. 2 maybe implemented in an air fryer, a baking oven, a grill, a stirrer, or a steamer, etc. In some embodiments, there may be provided a cooking device comprising the apparatus 200 as described herein. In these embodiments, the sensing element 210 of the apparatus 200 maybe configured to be inserted into or placed adjacent to a food item in the cooking device. Furthermore, the control unit 230 of the apparatus 200 may be configured to determine the temperate of the food item. In further detail, the detection unit 210 may be located near a cooking chamber of the cooking device, while the sensing element may be inserted into or placed adjacent to the food item inside the cooking chamber. In these embodiments, the object for which the temperature is sensed by the apparatus 200 is the food item contained in the cooking device. The apparatus 200 may also be implemented at any kitchen appliances, in particular where a measurement of the core temperature and/or the surface temperature of food item(s) is advantageous in the operation of such kitchen appliance.

Moreover, it will be appreciated that the apparatus 200 may be implemented in other fields including medical, wellbeing, process monitoring, etc. in which a passive temperature sensing technique may be advantageous.

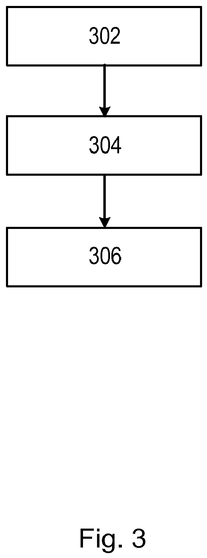

Fig. 3 illustrates a method of operating an apparatus for sensing the temperature of an object, according to an embodiment. The method maybe applied to the apparatus 100 as illustrated in Fig. 1 or the apparatus 200 as illustrated in Fig. 2. In more general terms, the method illustrated in Fig. 3 may be applied to an apparatus for sensing the temperature of an object which comprises a sensing element having a resonant circuit, a detection unit physically unconnected with the sensing element, and a control unit. In this apparatus, the resonant circuit has a temperature-dependent resonant frequency and comprises a capacitor which has a temperature coefficient in a predetermined range.

In order to facilitate understanding of the illustrated method, the description below will be made with reference to the components of the apparatus 100 as shown in Fig. 1. It will be appreciated that the illustrated method can generally be performed by or under the control of the control unit 130 of the apparatus 100.

With reference to Fig. 3, at block 302, interfacing is performed between the detection unit 120 and the resonant circuit 112 of the sensing element 110 in order to receive a response associated with a current resonant frequency of the resonant circuit. Specifically, the interfacing operation is performed by the detection unit 120 of the apparatus 100 with the resonant circuit 112.

As described with reference to Fig. 1, the detection unit 120 of the apparatus 100 may comprise a transmitter-receiver coil in some embodiments. In these embodiments, interfacing at block 302 may comprise inducing a magnetic coupling between the detection unit 120 and the resonant circuit 112. In more detail, a magnetic coupling may be induced between the transmitter-receiver coil of the detection unit 120 and the resonant circuit 112 when the sensing element 110 is placed within the vicinity of the detection unit 120. Furthermore, in these embodiments, the interfacing operation at block 302 may comprise controlling the transmitter-receiver coil to perform a frequency sweep to excite the resonant circuit in the sensing element 110. This controlling operation of the transmitter-receiver coil may be performed by the detection unit 120 itself, and in such embodiment the detection unit 120 may comprise one or more processors, processing units, multi-core processor or modules that are configured or programmed to perform such controls. Alternatively or in addition, this controlling operation of the transmitter-receiver coil may be performed by the control unit 130 of the apparatus 100.

Furthermore, in embodiments where the interfacing operation at block 302 comprises controlling the transmitter-receiver coil to perform a frequency sweep, the step of performing the frequency sweep may comprise performing a stepped sweep including a plurality of discrete steps each associated with a different frequency band. In these embodiments, each step in the frequency sweep may be performed by transmitting, by the detection unit 120, a corresponding radio-frequency stimulating signal to the resonant circuit 112 of the sensing element. Subsequently, the method may comprise transmitting, by the resonant circuit 112 of the sensing element 110, a response signal for each step in the frequency sweep. Specifically, a response signal corresponding to each of the radio-frequency stimulating signal maybe transmitted as a result of the excitation. A corresponding radio-frequency stimulating signal may be within the frequency range of 10kHz to 1MHz.

As described with reference to Fig. 1, in some embodiments the apparatus 100 may comprise one or more additional sensing elements. In these embodiments the sensing element 110 may be referred to as the "first sensing element", and the one or more additional sensing elements may be referred to, collectively, as "additional sensing element(s)". In these embodiments, each of the one or more additional sensing elements may comprise a respective resonant circuit, and each of the one or more additional sensing elements may be inserted into or placed adjacent to the object. Each of the respective resonant circuits of the one or more additional sensing elements in these embodiments may have a different temperature-dependent resonant frequency from each other. In addition, the temperature-dependent resonant frequency of each of the resonant circuits may be different from the temperature-dependent resonant frequency of the resonant circuit of the first sensing element 110. In these embodiments, the interfacing operation at block 302 may comprise interfacing the detection unit 120 with each of the resonant circuits of the additional sensing element(s) and of the first sensing element 110, in order to receive a response associated with a current resonant frequency of the respective resonant circuit. Therefore, in these embodiments, for each of the resonant circuits associated with first sensing element and the additional sensing element(s), a respective response may be received.

Returning to Fig. 3, at block 304, the current resonant frequency of the resonant circuit 112 is determined. More specifically, the current resonant frequency of the resonant circuit is determined by the control unit 130 of the apparatus 100.

As indicated above with reference to block 302, in some embodiments interfacing the detection unit with the resonant circuit may comprise controlling a transmitter-receiver coil of the detection unit 120 to perform a frequency sweep and specifically a stepped frequency sweep which includes a plurality of discrete steps each associated with a different frequency band. In addition, in these embodiments the method may further comprise transmitting, by the resonant circuit 112 of the sensing element 110, a response signal for each step in the frequency sweep. In these embodiments, determining the current resonant frequency of the resonant circuit 112 at block 304 may comprise processing the response signals associated with the frequency sweep to determine the current resonant frequency. Specifically, the determination of the current resonant frequency of the resonant circuit 112 may be based on the corresponding strengths and/or measured frequency values of the frequency-dependent response signals from the resonant circuit 112.

As indicated above with reference to block 302, in some embodiments the apparatus 100 may comprise one or more additional sensing elements each comprising a respective resonant circuit, and in these embodiments the interfacing operation may be performed between the detection unit 120 and each of the resonant circuits of the additional sensing element(s) and of the first sensing element 110, in order to receive a response associated with a current resonant frequency of the respective resonant circuit. In these embodiments, at block 304 the current resonant frequency of a resonant circuit of a respective additional sensing element may be determined based on the respective received response.

Returning to Fig. 3, at block 306, the temperature of the object is determined. More specifically, the temperature of the object is determined by the control unit 130 of the apparatus 100, based on the current resonant frequency of the resonant circuit 112 from block 304. Since within an appropriate temperature range there is a strong correlation between temperature and a current resonant frequency of the resonant circuit 112, determination of the temperature of the object at block 306 may be based on such correlation. Moreover, since a change in the temperature surrounding the capacitor 114 of the resonant circuit 112 would result in shifting of the resonant frequency of the resonant circuit 112, the shift of resonant frequency would be indicative of a change in the temperature surrounding the capacitor 114. Accordingly, determination of the temperature of the object at block 306 may be based on the shift of resonant frequency of the resonant circuit 112 that can be derived from the response signal.

As indicated above with reference to block 304, in some embodiments the apparatus 100 may comprise one or more additional sensing elements and the current resonant frequency of a resonant circuit of a respective additional sensing element may be determined based on a respective received response. In these embodiments, at block 306 the temperature of the object, or the temperature of a part of the object corresponding to the respective additional sensing element, may be determined based on the determined current resonant frequency of the resonant circuit of the respective additional sensing element. The part of the object corresponding to a respective additional sensing element may be a partial volume immediately adjacent to a location at which the respective additional sensing element is placed.

Although not illustrated in Fig. 3, in some embodiments, the method may further comprise controlling a display unit to display the determined temperature of the object. The display unit may be the display unit 140 of the apparatus 100 as illustrated in Fig. 1. Alternatively, the display unit may be implemented as part of a user interface of the apparatus 100.

It will be appreciated that the method as described herein with reference to Fig. 3 may be implemented in a number of different fields including cooking, medical, wellbeing, process monitoring, etc. in which a passive temperature sensing technique may be advantageous.

There is thus provided an improved apparatus for sensing the temperature of an object and a method of operating thereof which overcome the existing problems.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. An apparatus (100, 200) for sensing the temperature of an object, the apparatus comprising:
a sensing element (110, 210) configured to be inserted into or placed adjacent to the object, wherein the sensing element comprises a resonant circuit (112, 212), the resonant circuit having a temperature-dependent resonant frequency and comprising a capacitor (114, 214), and wherein the capacitor has a temperature coefficient in a predetermined range;
a detection unit (120, 220) configured to interface with the resonant circuit to receive a response associated with a current resonant frequency of the resonant circuit, wherein the sensing element and the detection unit are physically unconnected; and
a control unit (130, 230) configured to determine the current resonant frequency of the resonant circuit based on the received response, and to determine the temperature of the object based on the determined current resonant frequency of the resonant circuit.

2. The apparatus (100, 200) according to claim 1, wherein the detection unit comprises a transmitter-receiver coil, and is configured to interface with the resonant circuit (112, 212) by controlling the transmitter-receiver coil to perform a frequency sweep to excite the resonant circuit in the sensing element (110, 210).

3. The apparatus (100, 200) according to claim 2, wherein the frequency sweep is a stepped sweep including a plurality of discrete steps each associated with a different frequency band, and the resonant circuit (112, 212) is configured to transmit a response signal for each step in the sweep, further wherein the control unit (130, 230) is configured to determine the current resonant frequency of the resonant circuit by processing the response signals.

4. The apparatus (100, 200) according to claim 3, wherein the detection unit is configured to perform each step in the frequency sweep by transmitting a corresponding radio-frequency stimulating signal to the resonant circuit (112, 212) of the sensing element (110,210).

5. The apparatus (100, 200) according to any one of the preceding claims, wherein the temperature coefficient of the capacitor (114, 214) is predetermined based on an estimated temperature range of the object.

6. The apparatus (100, 200) according to any one of the preceding claims, wherein the capacitor (114, 214) is a ceramic capacitor.

7. The apparatus according to claim 6, wherein the ceramic capacitor comprises Y5V material.

8. The apparatus (100, 200) according to any one of the preceding claims, wherein the sensing element (110, 210) is a first sensing element, and the apparatus further comprises one or more additional sensing elements each comprising a respective resonant circuit and each configured to be inserted into or placed adjacent to the object, and each of the respective resonant circuits of the one or more additional sensing elements has a different temperature-dependent resonant frequency, and wherein the temperature-dependent resonant frequency of each of the resonant circuits is different from the temperature-dependent resonant frequency of the resonant circuit of the first sensing element, and
further wherein the detection unit (120, 220) is configured to interface with each of the resonant circuits to receive a response associated with a current resonant frequency of the respective resonant circuit;
further wherein the control unit (130, 230) is configured to:
determine the current resonant frequency of a resonant circuit of a respective additional sensing element based on the received response; and
determine the temperature of the object or a part of the object corresponding to the respective additional sensing element, based on the determined current resonant frequency of the resonant circuit of the respective additional sensing element.

9. The apparatus (100) according to any one of the preceding claims, further comprising a display unit (140) configured to display the determined temperature of the object.

10. A cooking device comprising the apparatus (100, 200) according to any one of the preceding claims, wherein the sensing element (110, 210) of the apparatus is configured to be inserted into or placed adjacent to a food item in the cooking device, and the control unit (130, 230) is configured to determine the temperature of the food item.

11. A method of operating an apparatus (100) for sensing the temperature of an object, wherein the apparatus comprises a sensing element (110) having a resonant circuit (112), a detection unit (120) physically unconnected with the sensing element, and a control unit (130), wherein the sensing element is configured to be inserted into or placed adjacent to the object, and the resonant circuit has a temperature-dependent resonant frequency and comprises a capacitor (114) which has a temperature coefficient in a predetermined range, and wherein the method comprises:
interfacing (302) the detection unit with the resonant circuit to receive a response associated with a current resonant frequency of the resonant circuit;
determining (304), by the control unit, the current resonant frequency of the resonant circuit based on the received response; and
determining (306), by the control unit, the temperature of the object based on the determined current resonant frequency of the resonant circuit.

12. The method according to claim 11, wherein the detection unit (120) comprises a transmitter-receiver coil, and wherein interfacing (302) the detection unit with the resonant circuit (112) comprises controlling the transmitter-receiver coil to perform a frequency sweep to excite the resonant circuit in the sensing element (110).

13. The method according to claim 12, wherein performing the frequency sweep comprises performing a stepped sweep which includes a plurality of discrete steps each associated with a different frequency band, and
wherein the method further comprises transmitting, by the resonant circuit, a response signal for each step in the sweep,
and wherein determining (304) the current resonant frequency of the resonant circuit comprises processing the response signals to determine the current resonant frequency.

14. The method according to claim 13, wherein performing the stepped sweep comprises perform each step in the frequency sweep by transmitting a corresponding radio-frequency stimulating signal to the resonant circuit (112) of the sensing element (110).

15. The method according to any one of claims 11 to 14, further comprising controlling a display unit (140) to display the determined temperature of the object.
